# EUROPEAN PATENT SPECIFICATION

(11) **EP 1 696 746 B1**
(45) Date of publication and mention of the grant of the patent: **13.02.2008**
(21) Application number: 03780476.2
(22) Date of filing: 27.12.2003
(51) Int. Cl.: A23L 1/40

(54) **PROCESS FOR THE PREPARATION OF INSTANT SOUP MIX FROM INDIAN DILL (ANETHUM SOWA)**
VERFAHREN ZUR HERSTELLUNG VON INSTANTSUPPE ENTHALTEND INDISCHER DILL (ANETHUM SOWA)
PROCEDE PERMETTANT DE PREPARER UNE SOUPE DESHYDRATEE INSTANTANEE A PARTIR D'ANETH DES INDES ORIENTALES (ANETHUM SOWA)

(43) Date of publication of application: 06.09.2006
(73) Proprietor: COUNCIL OF SCIENTIFIC AND INDUSTRIAL RESEARCH, New Delhi 110 001 (IN)
(72) Inventor: MYSORE, Narayan, Rekha, Mysore, 570 013 Karnataka (IN); CHAUHAN, Attar, Singh, Mysore, 570 013 Karnataka (IN); AVULA, Ramesh, Yadav, Mysore, 570 013 Karnataka (IN); GUHA, Manisha, Mysore, 570 013 Karnataka (IN); RAMTEKE, Ramesh, Shyam, Mysore, 570 013 Karnataka (IN)
(74) Representative: Bergquist, Kjell Gunnar
(86) International application number: PCT/IB2003/006190
(87) International publication number: WO 2005/070233

(56) References cited:
- ANONYMOUS: "Potato Dill Soup" INTERNET ARTICLE, [Online] XP002278164 Retrieved from the Internet: URL:http://www.virtualcities.com/ons/ny/go v/nygvdm10.htm> [retrieved on 2004-04-26]
- ANONYMOUS: "Dill" INTERNET ARTICLE, [Online] XP002278165 Retrieved from the Internet: URL:http://www.hort.purdue.edu/newcrop/med -aro/factsheets/DILL.html> [retrieved on 2004-04-26]

## Description

### FIELD OF THE INVENTION

The present invention relates to a process for the preparation of instant soup mix from Indian dill *(Anethum sowa)*

### BACKGROUND AND PRIOR ART

Soup mixes are convenient to prepare and are popular appetizers. Soups based on corn, chicken, mixed vegetables, palak and mushroom etc. are common in India and abroad. Apart from good storage stability of these products, the products with nutritional/therapeutic properties will be well received all over the world because of the increasing health consciousness amongst the population. Indian dill, locally known as 'sowa' in Northern India and 'Sabsige' in Southern India is a well-known leafy plant that can be classified under spices and condiments. It has good anti-oxidant properties as seen from the phenol content 1760mg/g with a reducing power of 2531 U/g, by virtue of which the value added products based on 'sabsige' will find demand and hence, ready market. Further, thin soups with reduced viscosities indicate their ability of holding more quantities of solids thus enhancing its energy and nutrient density. By incorporating modified starches into soup mixes, the reduction in their pasting behavior can be achieved. The formulation of such healthy products involves the optimized drying of all the ingredients concerned and mixing in suitable proportions apart from modifying the starch by subjecting to physical treatments in order to yield thin paste viscosities.

There are no prior reports as such available in the literature for the preparation of "sabsige" based soup mix with reduced paste viscosities but a few prior reports are available with respect to soup powders/mixes.

Reference may be made to Rincon-AM, araujo-de-Vizcarrondo-C, Carillo-de-Padila-F,Martin-E (1984). Evaluation of the possible technological uses of some Dioscoreas tubers: name congo (Dioscorea bulbifera) and mapuey (Dioscorea trifida), archivos-Latinamericanos-de-Nutricion; 50(3) 286-290. Wherein, the rheological properties of yam meal were studied to evaluate the possible food uses. Absence of a viscosity peak and the high temperature stability of congo meal make it an ideal ingredient for instant soup mixes and that the meals of white and purple manpuey are suitable for sauce thickener.

The main draw back of this invention is that the product/meal obtained from fresh diacorea tubers of three different varieties were studied for their properties. *Diascorea* sp. contain toxic alkaloids, which have to be removed by certain treatments before using in food products. As the meal is not cooked/heat treated before use, the digestibility of this tuber starch will be poor on consumption compared to physically treated starches.

Reference may be made to Unilever NV 1973. Method for producing a pea soup mixture. Netherlands-Patent-Application (7211214). Wherein, the production of soup mix is prepared from pea flakes made with cooked green split peas, hydrogenated oil and raw potato starch.

The main drawback of this invention is that the product development involved the formation of paste by mixing the ingredients and drying the paste into a thin film to form flakes.The flakes are further agglomerated with pea flour, corn syrup solids etc. followed by drying.

Reference may be made to Spice & Flavour Services Ltd. (1971). Dry soup mixes. British patent (1254562). Wherein, the soup mixes suitable for vending machines were prepared. Unmodified starch was used as a thickening agent and the ingredients were coated with a fat containing an emulsifying agent.

The main draw back of this process is usage of unmodified starch as thickening agents and no Indian Dill is used in the mix which has anti-oxidant property.

Reference may be made to Govindan, T. K (1970) Freeze drying of fishery products: preparation of instant fish soup mixes and their preservation by freeze drying. Research and Industry.-C.S.I.R., India 15(3) 162-163. Wherein, a process for extruded noodles from cooked fish, minced with onion, 'vanaspati', salt etc. with monosodium glutamate and freeze dried to be used as soup mix. The product is reconstituted with boiling water.

The main drawback in this process is that fish based soup mix is prepared by freeze-drying method which is an expensive technique. The product will be in the form of a noodle till reconstitution and hence an extruder operation is also involved.

Reference may be made to Anon (1971) New: air-dried mushrooms. Agricultural Research (Washington); 19 (7)6. Wherein, development of dried mushroom by hot air drying at low temperature followed by high temperature was described. The dried mushroom was comparable with that of freeze-dried mushroom in flavor.

The main draw back of this process is that it is a combination of both high and low temperature drying for flavour retention of mushrooms. The process relates the use of such dried mushrooms in soup mixes.

Reference maybe made to Essink-GK (1994) Potato based texturisers for dry and liquid foods. Food Marketing & Technology; 8(3)12-14. Wherein, the properties of potato starch as an ingredient in tomato sauce, paste, powdered tomato etc. were discussed. The desired texture in sauces could be achieved by using appropriate starch or any other non-hydrocolloid functional ingredients.

The Main drawback of the above process is that the effective application or suitability of starch or other functional non-hydrocolloids was studied with reference to tomato sauce.

Reference may be made to McComber-DR; Osman-EM (1991) Use of concentrated and pure Pontiac potato starch. US patent US 4981710. Wherein, non-cross linked Pontiac potato. starch was used as starch source in an edible food product mix. Since it is resistant to thinning, Pontiac starch is suggested for soups as a thickening agent.

The Main drawback of the above process is that the Pontiac starch is suggested in food product mixes in place of other chemically modified thickening agents owing to its abnormal behavior of resistance to thinning.

Reference may be made to Ibanoglu-S (1999). Functional properties of spray dried tarhana. Drying Technology; 17(1/2), 327-333. Wherein, the soups made with traditional tarhana (fermented yoghurt-wheat flour mixture) and spray dried tarhana were compared. The low sensory scores of soup based on spray-dried tarhana was due to the chemical treatment given to reduce the slurry viscosity.

The main drawback of above process is that the soups are prepared from chemically modified (acid hydrolysed) starch source. Though the slurry viscosity is reduced, the product showed very low sensory score.

Reference may be made to Ibanoglu-S, Ibanoglu-E,Ainsworth-P(1998) Effect of dilute acid hydrolysis on the cooked viscosity of tarhana, a traditional Turkish cereal soup. International Journal of Food Sci. & Nutrition; 49 (6), 463-466. Wherein, it was shown that during acid hydrolysis of tarhana to obtain a low viscosity tarhana with high solids, concentration of acid had the most pronounced effect on the viscosity though interaction of time with temperature were also significant. A regression equation was developed to obtain tarhana soups of desired viscosity.

The main draw back of the above process is that the finished product is based on a chemically modified starch source. Though the viscosity was reduced to a desired level, acid modification resulted in low sensory scores.

Reference may be made to Gaines-CS, Kassuba-A, Finney-PL (1995) A soup model study comparing flour peak viscosity during heating and viscosity of flour gels during reheating. Cereal Chemistry; 72(3), 233-236. A visco-graph was used to study a model system based on apparent viscosity of commercial canned soups. Unless flours were produced from highly field sprouted wheat, there was no relation between hot paste viscosity attained during first heating and viscosity of the same pastes that were allowed to gel before being stored and reheated to serving temperature. Prediction of viscosity of flour-thickened soups at serving temperature may be better accomplished using direct measurement of alpha amylase activity or determination of reheated gel viscosity rather than viscograph hot paste peak viscosity.

The main draw back of the above work is that the studies were confined to wheat flour based commercial canned soups hence alpha amylase activity determination may not be a serving temperature were reported.

Reference may be made to Sopade-RA, KassuM-AL, Adamu-DJM(1993) Rheological characterization of some Nigerian traditional soups. International Journal of food Sci. & Technol. 28(6), 647-653. Wherein, the rheological properties of soups in the temperature range 10-70° C were investigated and found that the decrease in apparent viscosity of soups with speed indicated pseudo-plastic behaviour. The use of sun dried materials, as ingredients did not alter the pseudoplastic behaviour.

The main draw back of the above work is that the studies were confined to the behaviour of soups and the changes in their plasticity behaviour on using sun dried materials, mainly the okra.

Reference may be made to Ohira-T, Mijano-R, Yoshida-R(1981) Smoked starch. UK Patent application 2050798A. Wherein, the retention of viscosity and gel forming ability on heating and subsequent cooling of starches were improved by smoking at a given temperature for 2 to for 3 min. and by pH modification. Such modified starches were found useful for dairy, confectionery, soups and meat and fish products.

The main draw back of the above work is that the studies were conducted by chemical modification, moisture and pH adjustment of starches.

### OBJECT OF THE INVENTION

The main objective of the present invention is to provide a process for the preparation of Instant soup mix from Indian dill.

In another objective of the present invention is to provide a process for the preparation of Indian dill powder.

Yet in another objective of the present invention is to provide a process for the preparation of modified potato starch with reduced paste viscosity.

Still, yet in another objective of the present invention is to provide a process for preparation of onion powder for the use in the soup mix.

Still in another objective of the present invention is to reduce the moisture of content of soup mix by hot air drying.

**The novelty of the present invention** is that the soup mix is an instant, low viscous product with good anti-oxidant properties. It is a free flowing, convenience product prepared by virtue of this invention using sabsige, modified potato flour, maltodextrin and other ingredients. The process also includes mixing of dry ingredients to maintain low moisture followed by finish drying to bring down the moisture of soup mix further to 5%, addition of Tertiary Butyl Hydro Quinone (TBHQ) at 200 ppm level on fat weight basis to the soup mix. The product is free flowing with a moisture content: 3-5%, Critical Moisture Content 11%, Fat 9.5%, Free Fatty Acids mg/g: 3.36, Peroxide Value/g: Nil, Hunter Color values as L,A,B, L: 73.0, A:-4.137, B: 16.13. Total plate counts: 18750/g, and Yeast and Molds: Nil

As the Indian dill is commonly considered as spices and condiments, people think it is not for making soup. Contrary to this belief the applicants used the Indian dill for preparing soup and found very much effective to soup lovers.

### SUMMARY OF THE INVENTION

Indian Dill or 'Sabsige' based dry soup mix containing modified starch has low paste viscosities thereby help in holding more solids. It is thus a nutrient and energy dense product with anti oxidant property. Fresh leaves have good anti-oxidant properties as seen from the phenol content 1760 mg/g, by virtue of which the value added products based on 'sabsige' will find demand. Soup mix formulation having ratio of different ingredients in the range - skim milk powder : com flour : potato flour : wheat flour : malto dextrin : fat : dill powder: salt : sugar : onion : pepper, 20 : 15 : 11.75 :12.5 :12.5: 7.5 : 5 : 6: 2.5 : 1.75 then finish dried and packed in metallasied polyester/polyethylene laminate pouches (200gauge), has a shelf life up to 8 months at room temperature with 65% relative humidity. The formulation also showed antioxidant property to the extent as shown by the values of phenol content of 4.5 mg/g with a reducing Power of the source (soup mix) 870 U/g.

### DETAILED DESCRIPTION OF THE INVENTION

Accordingly, the present invention provides a process for the preparation of instant soup mix from Indian dill (*Anethum sowa*)*,* which comprising the steps:
i. cutting the cleaned Indian dill leaves into shreds of 4-5 cm long;
ii. soaking the shreds of step (i) in a solution containing 0.5 to 1.0 % sodium bi carbonate for a period of 20 to 40 minutes;
iii. drying the soaked shreds of step (ii) using hot air at a temperature in the range of 40°-50°C;
iv. powdering the dried shreds of step (iii) and passing through sieve with a pore size of about 400 to 600 µm.
v. powdering the drum dried, cabinet dried and sun dried potato cubes, and dried onion shreds and passing through sieve with a pore size of about 500 µm;
vi. mixing skim milk powder : Corn flour : Potato flour : wheat flour : malto dextrin: fat : dill powder : salt : sugar : onion : pepper with a ratio in the range of 10-20 : 12-15 : 10-12 : 10- 14 : 10-14 : 3-8 : 3-6 : 3-5 : 3-7 : 2-4 : 1-2.5 (w/w) respectively to obtain soup mix, and
vii. obtaining the instant soup mixture by drying the soup mix of step (vi) till the moisture content of the said becomes 3 to 5%.
viii. packing the soup mixture of step (vii) in metallised polyester/ polyethylene laminate pouches (200gauge), has a shelf life up to 8 months in 65% relative humidity at RT.
ix. Reconstituting the soup mix in cold water (soup mix: water, 1: 10-12), stirred and brought to boil has an excellent color, taste, flavor and consistency and over all quality.

In an embodiment of the present invention, the fresh, firm, uninfested Dill leaves may be washed trimmed and they are cut into portions of 4-5 cm length.

In another embodiment of the present invention, the cut Indian Dill leaves may be soaked in solution containing Sodium bi carbonate (leaf : Solution 1:2) for 20 minutes at RT (27-30°C) followed by draining.

Yet, in another embodiment of the present invention, the drained shreds may be spread on aluminum trays, (load, 3kg/sqm), surface dried in a cabinet drier at 45°C for a period of 4-5 hrs.

Still in another object of the present invention the drum drying of potato is performed by following steps:
i. dicing the potatoes into cubes;
ii. cooking potatoes of step (a) at 70 to 75°C in an autoclave for about 15 to 20 minutes followed by cooling at 12 to 17°C for about 15 to 20 minutes;
iii. cooking the cooled potatoes of step (ii) at a temperature in the range of 75 to 85°C for about 15 to 20 minutes;
iv. mashing the cooked potatoes of step (iii) in a mixture;
v. adding potassium metabisulphite in the range of 1500 to 2500 mg/kg, whey protein concentrate in the range of 0.02% to 0.09% and monosodium glutamate in the range of 0.05 to 0.1% to the potato mash, and
vi. drying the potato mash of step (v) and ground into powder followed by passing through a sieve with a pore size in the range of 400 to 600µm to obtain the potato flour.

In another embodiment of the present invention cabinet drying of potato is performed by following steps:
i. dicing the potatoes into cubes;
ii. autoclaving the potatoes of step (i) for a period of about 3 to 8 minutes to inactivate the enzyme followed by cooling the same;
iii. adding potassium metabisulphite to the potatoes of step (ii) in the range of 1500 to 2500 mg/kg for a period of 10 to 30 minutes;
iv. drying the cooled potato of step (iii) at a temperature in the range of 60-70°C for about 6 to 8 hours, and
v. grinding the dried potato of step (iv) into powder followed by passing through a sieve with a pore size in the range of 400 to 600µm to obtain the potato flour.

Still in another embodiment of the present invention the drying and grinding of onion is performed by following steps:
i. slicing the peeled onion;
ii. drying the sliced onion of step (i) in hot air at a temperature in the range of 55 to 65°C to obtain the dehydrated onion shreds, and
iii. grinding the dehydrated onion shreds of step (ii) and passing through a sieve with a pore size in the range of 400 to 600 µm to obtain the onion powder.

Still yet, in another embodiment of the present invention, the dried leaves may be powdered in a hammer mill of 500 µm sieve and packed in suitable polyethylene pouches and kept in air tight containers and stored at 12±1°C for further use.

Still, in another embodiment of the present invention, the potato cubes may be dried after pretreatments in a mechanical drier and powdered in a hammer mill of 500 µm sieve. The above potato flour has a peak viscosity of 1636 mPa.s, hot Paste viscosity of 1162 mPa.s and cold paste viscosity of 1440 mPa.s. The powder was packed in polyethylene pouches, kept in air tight containers and stored at 12±1°C for further use.

Yet, in another embodiment of the present invention, the fresh pink onions were cut for topping and tailing, peeled and shredded using a slicer. Slices were then dried in a hot air drier at 65°C for 4hrs to get dehydrated onion shreds. Dried shreds powdered in a hammer mill of 500 µm sieve and packed in suitable polyethelyne pouches and kept in air tight containers and stored at 12±1°C for further use.

Yet, in another embodiment of the present invention the soup mix was formulated by using ingredients such as Indian dill powder, wheat flour, corn flour, modified potato flour, skim milk powder, hydrogenated vegetable oil, salt, sugar, along with onion powder, pepper powder and anti oxidant.

The process of the present invention involves following steps
i) Cutting the cleaned Indian dill leaves into portions of 4-5 cm long using stainless steel knives.
ii) Soaking the shreds in a solution containing 0.5-1.0 % sodium bi carbonate (Slices: Solution, 1:2) at RT (27-30°C) for 20-40 minutes.
iii) The soaked leaves are drained and spread on to aluminum trays at the rate of 3-4kg/sq m, and dried at 40°-50°C in a hot air drier.
iv) The dried leaves were powdered in a hammer mill of 500 µm sieve and the powder.
v) The Drum dried, Cabinet dried and sun dried potato cubes, and dried onion shreds were powdered in a hammer mill of 500 µm sieve and the powder were prepared for use in the soup mix formulation.
vi) Soup mix formulation having ratio of different ingredients in the range - Skim milk powder : Corn flour : Potato flour : wheat flour : Malto dextrin : Fat : Dill powder : Salt : Sugar : Onion : Pepper , 10-20 : 12-15 : 10-12 : 10-14 : 10-14 : 3-8 : 3-6 : 3-5 : 3-7 : 2-4 : 1-2.5 (w/w).
vii) The peak viscosity, hot paste viscosity and cold paste viscosity of soup mix using drum dried potato flour in the above formulation were 127,107 and 186 mPa.s respectively.
viii) The peak viscosity, hot paste viscosity and cold paste viscosity of soup mix using cabinet dried potato flour in the above formulation were 145,126 and 288 mPa.s respectively.
ix) The peak viscosity, hot paste viscosity and cold paste viscosity of soup mix using Native potato flour in the above formulation were 182,167 and 291 mPa.s respectively.
x) The peak viscosity, hot paste viscosity and cold paste viscosity of soup mix using cabinet dried potato flour in place of corn flour and wheat flour in the above formulation were 133,130 and 208 mPa.s respectively.
xi) Soup mix made from modified potato flours show optimum pasting behavior for the formulation of soup when compared to native flour.
xii) The instant Indian dill soup mix based on the above formulation when finish dried to a moisture content of 3.5-4.5%, then packed in Metallsied Polyester/ polyethylene laminate pouches (200gauge), has a shelf life upto 8 months in 65% Relative Humidity at RT.
xiii) The soup mix when reconstituted in cold water (soup mix: water, 1: 10-12), stirred and brought to boil has an excellent color, taste, flavor and consistency and over all quality.

### EXAMPLES

### Example 1

2.35 kg of fresh Indian dill were cut to separate the roots, and then the tender leaf and stalk portion were manually separated from the firm mature ones. Prepared material was washed thoroughly with tap water, cut into portions of 4-5 cm long using stainless steel knives. Shreds were soaked in a solution containing 0.5% sodium bi carbonate (Slices: Solution, 1:2) at RT for 20 minutes. The soaked leaves were drained and spread on to aluminum trays at the rate of 3kg/sq m, and dried at 40°C in a hot air drier to reduce the weight of the material to 150g. The dried leaves were powdered in a hammer mill of 500 µm sieve and the powder (145 g) was used for the formulation of soup mix.

20 kg· Fresh potatoes were washed and peeled using abrasive peeler followed by trimming with stainless steel peeler. The peeled potatoes (17.75kg) were kept under water till they were fed into dicing machine provided with 1 cm cubic blade. The potatoes were diced into cubes. The diced cubes (17.75) were taken on perforated aluminum trays and cooked at 70-75°C in an autoclave for 20 minutes, followed by cooling at 15°C for 20 minutes. The cooled material was cooked again at 85°C for 20 minutes followed by mashing in sigma mixer. 2000 ppm potassium metabisulphite, 0.05% whey protein concentrate and 0.05% monosodium glutamate were added to the mash. The potato mash was roller dried at 6 bar steam pressure and at a drum speed of 4 rpm. The dried flakes (3.7kg) were collected and ground into powder through a hammer mill of 500µm sieve. The drum dried potato flour (3.65kg) prepared as above has a Peak Viscosity of 328 mPa.s Hot Paste Viscosity of 253 mPa.s and Cold Paste Viscosity of 399 mPa.s.

The fresh pink onions (9kg) were cut for topping and tailing; they were peeled and sliced using a slicer. Slices (8kg) were then dried in a hot air drier at 65°C for 4hrs to get dehydrated onion shreds. Dried slices (0.800kg) were powdered in a hammer mill of 500 µm sieve. The powder (kg) was used in the formulation. The other ingredients used for the soup mix such as skimmed milk powder, salt, sugar, hydrogenated fat, wheat flour, corn flour, pepper powder, malto dextrin were procured from the market. Soup mix formulation had the following ratio of different ingredients, Skim milk powder : Corn flour : Potato flour : wheat flour : Malto dextrin : Fat : Dill powder : Salt : Sugar : Onion : Pepper , 20 : 15 : 11.75 :12.5 :12.5: 7.5 : 5 : 6: 2.5 : 1.75. Tertiary Butyl Hydro Quinone (TBHQ) to an extent of 200ppm on the weight of fat was incorporated. The product was finish dried in hot air drier to obtain a product with moisture content: 3.6 %. The peak viscosity, hot paste viscosity and cold paste viscosity of soup mix were 127,107 and 186 mPa.s respectively.

### Example 2

Indian dill powder and onion powder as described in example 1 were used in the following example.

13.25 kg Fresh potatoes were washed and peeled using abrasive peeler followed by trimming with stainless steel peeler. The peeled potatoes (11.26 kg) were kept under water till they were fed into dicing machine provided with 1 cm cubic blade. The potatoes were diced into cubes. The diced cubes (11.26) were taken on perforated aluminum trays and blanched in an autoclave for a period of 4 minutes to inactivate the enzymes. After cooling, the pieces were soaked in 2000 ppm KMS solution for a period of 20 minutes at RT. The pieces were drained and dried in a mechanical drier at 65± 2 °C for 6-8 hrs. The dried cubes (2.39kg) were powdered in a hammer mill of 500 µm sieve. The potato flour (2.28 kg) prepared as above has a Peak Viscosity of 363 mPa·s, Hot Paste Viscosity of 360 mPa·s and Cold Paste Viscosity of 518 mPa·s.

The other ingredients used for the soup mix such as skimmed milk powder, salt, sugar, hydrogenated fat, wheat flour, corn flour, pepper powder, malto dextrin were procured from the market. Soup mix formulation had the following ratio of different ingredients Skim milk powder : Corn flour : Potato flour : wheat flour : Malto dextrin : Fat : Dill powder : Salt : Sugar : Onion : Pepper , 20 : 15 : 11.75 :12.5 :12.5: 7.5 : 5 : 6: 2.5 : 1.75. Tertiary Butyl Hydro Quinone (TBHQ) to an extent of 200ppm on the weight of fat was incorporated. The product was finish dried in hot air drier to obtain a product with a moisture content: 3.6 %, critical moisture content 11%, fat 9.5%, free fatty acids mg/g: 3.36, peroxide value/g: nil, hunter color values as L, a, b, L: 73.0, a: -4.137, b: 16.13. total plate counts: 18750/g, and yeast and molds: Nil, coliforms: Nil. The peak viscosity, hot paste viscosity and cold paste viscosity of soup mix were 145,126 and 228 mPa·s respectively. Its anti-oxidant value in terms of phenol content mg/g.4.5 with reducing Power of the source U/g (soup mix) 870.

### Example 3

Indian dill powder and onion powder as described in example 1 were used in the following example. The Native potato flour was used in the formulation.

The other ingredients used for the soup mix such as skimmed milk powder, salt, sugar, hydrogenated fat, wheat flour, com flour, pepper powder, malto dextrin were procured from the market. Soup mix formulation had the following ratio of different ingredients Skim milk powder : Corn flour : Potato flour : wheat flour : Malto dextrin : Fat : Dill powder : Salt : Sugar : Onion : Pepper , 20 : 15 : 11.75 :12.5 :12.5: 7.5 : 5 : 6: 2.5 : 1.75. Tertiary Butyl Hydro Quinone (TBHQ) to an extent of 200ppm on the weight of fat was incorporated. The product was finish dried in hot air drier to obtain a product with moisture content: 3.6 %. The peak viscosity, hot paste viscosity and cold paste viscosity of soup mix were 182,167 and 291 mPa.s respectively.

### Example 4

Indian dill powder and onion powder as described in example 1 and potato flour as described in example 2 were used. The other ingredients used for the soup mix such as skimmed milk powder, salt, sugar, hydrogenated fat, wheat flour, corn flour, pepper powder, malto dextrin were procured from the market. Soup mix formulation had the following ratio of different ingredients Skim milk powder : Potato flour : Malto dextrin : Fat : Dill powder : Salt : Sugar : Onion : Pepper , 20 : 39.5 : 12.5 : 7.5 : 5 : 6: 2.5 : 1.75. Tertiary Butyl Hydro Quinone (TBHQ) to an extent of 200ppm on the weight of fat was incorporated. The product was finish dried in hot air drier to obtain a product with moisture content: 3.6 %. The peak viscosity, hot paste viscosity and cold paste viscosity of soup mix were 133,130 and 208 mPa·s respectively.

Soup mix formulation was made with ingredients described as above excepting the modified potato starch. Native potato flour with Peak viscosity of 634 mPa·s, hot paste viscosity of 604 mPa·s and cold paste viscosity of 662 mPa·s was used in the formulation. The soup mix showed Peak viscosity of 182 mPa·s hot paste viscosity of 167 mPa·s and cold paste viscosity of 291 mPa·s.

The soups prepared as per the examples and offered to 100 soup lovers. Out of 100 tasted the soup, 70% said the soup is very good, 10% said good, 15% said acceptable, and 5% said no comments.

### The main advantages:

1. The Indian dill or sowa is known for its medicinal properties like carminative, antipyretic and antihelmintic, in addition to being an antiflatulent.
2. The soup mix has good anti-oxidant properties with its Phenol content mg/g 4.5; and Reducing Power of the source (soup mix) U/g 870;
3. Soups play an important role as an appetizer in diet.
4. Being a dry soup mix it has a better shelf life.
5. It can be easily reconstituted by mixing in 1:10-12 ratio of soup powder: cold water. The mixture is stirred and brought to boil before serving.
6. The product prepared by the present invention has excellent sensory qualities in terms of color, consistency, flavor and overall quality.
7. The product prepared by the present invention and packed in metallized PET/Poly laminate pouches has good storage stability beyond 8 months at room temperature without affecting the sensory characteristics.

## Claims

1. A process for the preparation of instant soup mix from Indian dill (*Anethum sowa),* said process comprising the steps:
i) cutting the cleaned Indian dill leaves into shreds of 4-5 cm long;
ii) soaking the shreds of step (i) in a solution containing 0.5 to 1.0 % sodium bi carbonate for a period of 20 to 40 minutes;
iii) drying the soaked shreds of step (ii) using hot air at a temperature in the range of 40°-50°C;
iv) powdering the dried shreds of step (iii) and passing through sieve with a pore size of about 400 to 600 µm.
v) powdering the drum dried, cabinet dried and sun dried potato cubes, and dried onion shreds and passing through sieve with a pore size of about 500 µm.
vi) mixing skim milk powder : Corn flour : Potato flour : wheat flour : malto dextrin: fat : dill powder : salt : sugar : onion : pepper with a ratio in the range of 10-20 : 12-15 : 10-12 : 10- 14 : 10-14 : 3-8 : 3-6 : 3-5 : 3-7 : 2-4 : 1-2.5 (w/w) respectively to obtain soup mix, and
vii) obtaining the instant soup mixture by drying the soup mix of step (vi) till the moisture content of the said becomes 3 to 5%.

2. A process as claimed in claim 1, wherein in step (ii) the ratio of shreds and solution is 1:2.

3. A process as claimed in claim 1, wherein in step (v) the potatoes and onions are dried using drying techniques selected from a group comprising drum drying, cabinet drying and sun drying.

4. A process as claimed in claim 3, wherein the drum drying of potato is performed by following steps:
(i) dicing the potatoes into cubes;
(ii) cooking potatoes of step (a) at 70 to 75°C in an autoclave for about 15 to 20 minutes followed by cooling at 12 to 17°C for about 15 to 20 minutes;
(iii) cooking the cooled potatoes of step (ii) at a temperature in the range of 75 to 85°C for about 15 to 20 minutes;
(iv) mashing the cooked potatoes of step (iii) in a mixture;
(v) adding potassium metabisulphite in the range of 1500 to 2500 mg/kg, whey protein concentrate in the range of 0.02% to 0.09% and monosodium glutamate in the range of 0.05 to 0.1% to the potato mash, and
(vi) drying the potato mash of step (v) and ground into powder followed by passing through a sieve with a pore size in the range of 400 to 600µm to obtain the potato flour.

5. A process as claimed in claim 4, wherein the cabinet drying of potato is performed by following steps:
(i) dicing the potatoes into cubes;
(ii) autoclaving the potatoes of step (i) for a period of about 3 to 8 minutes to inactivate the enzyme followed by cooling the same;
(iii) adding potassium metabisulphite to the potatoes of step (ii) in the range of 1500 to 2500 mg/kg for a period of 10 to 30 minutes;
(iv) drying the cooled potato of step (iii) at a temperature in the range of 60-70°C for about 6 to 8 hours, and
(v) grinding the dried potato of step (iv) into powder followed by passing through a sieve with a pore size in the range of 400 to 600µm to obtain the potato flour.

6. A process as claimed in claim 4, wherein the drying and grinding of onion is performed by following steps:
(i) slicing the peeled onion;
(ii) drying the sliced onion of step (i) in hot air at a temperature in the range of 55 to 65°C to obtain the dehydrated onion shreds, and
(iii) grinding the dehydrated onion shreds of step (ii) and passing through a sieve with a pore size in the range of 400 to 600 µm to obtain the onion powder.

7. A process as claimed in claim 1, wherein in step (vi) the peak viscosity, hot paste viscosity and cold paste viscosity of soup mix using drum dried potato flour are 127,107 and 186 mPa.s respectively.

8. A process as claimed in claim 1, wherein in step (vi) the peak viscosity, hot paste viscosity and cold paste viscosity of soup mix using cabinet dried potato flour in the soup mix are 145,126 and 288 mPa.s respectively,

9. A process as claimed in claim 1, wherein in step (vi) the peak viscosity, hot paste viscosity and cold paste viscosity of soup mix using native potato flour in the soup mix are 182,167 and 291 mPa·s respectively.

10. A process as claimed in claim 1, wherein in step (vi) the peak viscosity, hot paste viscosity and cold paste viscosity of soup mix using cabinet dried potato flour in place of corn flour and wheat flour in the soup mix are 133,130 and 208 mPa.s respectively.

11. A process as claimed in claim 1, wherein in step (vi) the soup mix is packed in metallsied polyester/ polyethylene laminate pouches having a thickness of 150 to 250gauge, has a shelf life up to 8 months in 65% relative humidity at room temperature.

12. A process as claimed in claim 1, wherein in step (vii) the soup mix when reconstituted in cold water (soup mix: water::1: 10-12), stirred and brought to boil has an excellent color, taste, flavor and consistency and over all quality.

13. A process as claimed in claim 1, wherein the instant soup mix is free flowing with a moisture content in the range of 3 to 5%, critical moisture content in the range of 9 to 13%, fat in the range of 8 to 9.5%, free fatty acids mg/g about 3.36, peroxide value/g: nil, hunter color values as L, a, b, L: 73.0, a: -4.137, b: 16.13 and total plate counts is about 18750/g and yeast and moulds is not present.

14. An instant soup mix obtainable by the process of claim 1.

15. An instant soup mix as claimed in claim 14, wherein the soup is free flowing with a moisture content in the range of 3 to 5%, critical moisture content in the range of 9 to 13%, fat in the range of 8 to 9.5%, free fatty acids mg/g about 3.36, peroxide value/g: nil, hunter color values as L, a, b, L: 73.0, a: -4.137, b: 16.13 and total plate counts is about 18750/g and yeast and moulds is not present.

## Patentansprüche

1. Verfahren zur Herstellung eines Instantsuppengemisches aus Indischem Dill (*Anethum sowa*)*,* wobei das Verfahren die Schritte umfasst:
i) Schneiden der gereinigten Blätter des Indischen Dills in Stückchen mit einer Länge von 4 - 5 cm;
ii) Einweichen der Stückchen von Schritt (i) in einer 0,5 bis 1,0 % Natriumbicarbonat enthaltenden Lösung über einen Zeitraum von 20 bis 40 Minuten hinweg;
iii) Trocknen der eingeweichten Stückchen von Schritt (ii) unter Verwendung von Heißluft bei einer Temperatur im Bereich von 40° - 50°C;
iv) Pulverisieren der getrockneten Stückchen von Schritt (iii) und Durchleiten durch ein Sieb mit einer Porengröße von etwa 400 bis 600 µm;
v) Pulverisieren der in einer Trockentrommel getrockneten, in einem Trockenschrank getrockneten und in der Sonne getrockneten Kartoffelwürfel und getrockneten Zwiebelstückchen und Durchleiten durch ein Sieb mit einer Porengröße von etwa 500 µm;
vi) Mischen von Magermilchpulver : Stärkemehl : Kartoffelmehl : Weizenmehl : Maltodextrin : Fett : Dillpulver : Salz : Zucker: Zwiebel : Pfeffer in einem Verhältnis im Bereich von jeweils 10 - 20 : 12 - 15 : 10 - 12 : 10 - 14 : 10 - 14 : 3 - 8 : 3 - 6 : 3 - 5 : 3 - 7 : 2 - 4 : 1 - 2,5 (Gew./Gew.), um ein Suppengemisch zu erhalten, und
vii) Erhalten des Instantsuppengemisches durch Trocknen des Suppengemisches von Schritt (vi), bis dessen Feuchtigkeitsgehalt 3 bis 5 % erreicht.

2. Verfahren nach Anspruch 1, wobei in Schritt (ii) das Verhältnis von Stückchen und Lösung 1 : 2 beträgt.

3. Verfahren nach Anspruch 1, wobei in Schritt (v) die Kartoffeln und Zwiebeln unter Verwendung von Trocknungstechniken getrocknet werden, die aus einer Gruppe ausgewählt sind, die Trocknen in einer Trockentrommel, Trocknen in einem Trockenschrank und Trocknen in der Sonne umfasst.

4. Verfahren nach Anspruch 3, wobei das Trocknen von Kartoffeln in einer Trockentrommel mit den folgenden Schritten durchgeführt wird:
i) Schneiden der Kartoffeln in Würfel;
ii) Kochen der Kartoffeln von Schritt (a) über etwa 15 bis 20 Minuten hinweg bei 70 bis 75°C in einem Autoklaven, gefolgt von Abkühlung bei 12 bis 17°C über etwa 15 bis 20 Minuten hinweg;
iii) Kochen der abgekühlten Kartoffeln von Schritt (ii) bei einer Temperatur im Bereich von 75 bis 85°C über etwa 15 bis 20 Minuten hinweg;
iv) Zerstampfen der gekochten Kartoffeln von Schritt (iii) in einem Gemisch;
v) Zugeben von Kaliummetabisulfit im Bereich von 1500 bis 2500 mg/kg, Molkenproteinkonzentrat im Bereich von 0,02 % bis 0,09 % und Mononatriumglutamat im Bereich von 0,05 % bis 0,1 % zu dem Kartoffelbrei und
vi) Trocknen des Kartoffelbreis von Schritt (v) und Mahlen zu Pulver, gefolgt von Durchleiten durch ein Sieb mit einer Porengröße im Bereich von 400 bis 600 µm, um das Kartoffelmehl zu erhalten.

5. Verfahren nach Anspruch 4, wobei das Trocknen von Kartoffeln im Trockenschrank mit den folgenden Schritten durchgeführt wird:
i) Schneiden der Kartoffeln in Würfel;
ii) Autoklavieren der Kartoffeln von Schritt (i) über einen Zeitraum von etwa 3 bis 8 Minuten hinweg, um das Enzym zu inaktivieren, gefolgt von deren Abkühlung;
iii) Zugeben von Kaliummetabisulfit im Bereich von 1500 bis 2500 mg/kg zu den Kartoffeln von Schritt (ii) über einen Zeitraum von 10 bis 30 Minuten hinweg;
iv) Trocknen der abgekühlten Kartoffeln von Schritt (iii) bei einer Temperatur im Bereich von 60 - 70°C über etwa 6 bis 8 Stunden hinweg und
v) Mahlen der getrockneten Kartoffeln von Schritt (iv) zu Pulver, gefolgt von Durchleiten durch ein Sieb mit einer Porengröße im Bereich von 400 bis 600 µm, um das Kartoffelmehl zu erhalten.

6. Verfahren nach Anspruch 4, wobei das Trocknen und Mahlen von Zwiebeln mit den folgenden Schritten durchgeführt wird:
i) Schneiden der geschälten Zwiebeln in Scheiben;
ii) Trocknen der in Scheiben geschnittenen Zwiebeln von Schritt (i) in Heißluft bei einer Temperatur im Bereich von 55 bis 65°C, um die dehydrierten Zwiebelstückchen zu erhalten, und
iii) Mahlen der dehydrierten Zwiebelstückchen von Schritt (ii) und Durchleiten durch ein Sieb mit einer Porengröße im Bereich von 400 bis 600 µm, um das Zwiebelpulver zu erhalten.

7. Verfahren nach Anspruch 1, wobei in Schritt (vi) die Maximalviskosität, Pastenviskosität bei Wärme und Pastenviskosität bei Kälte eines Suppengemisches unter Verwendung von Mehl aus in einer Trockentrommel getrockneten Kartoffeln 127, 107 beziehungsweise 186 mPa·s betragen.

8. Verfahren nach Anspruch 1, wobei in Schritt (vi) die Maximalviskosität, Pastenviskosität bei Wärme und Pastenviskosität bei Kälte eines Suppengemisches unter Verwendung von Mehl aus in einem Trockenschrank getrockneten Kartoffeln in dem Suppengemisch 145, 126 beziehungsweise 288 mPa·s betragen.

9. Verfahren nach Anspruch 1, wobei in Schritt (vi) die Maximalviskosität, Pastenviskosität bei Wärme und Pastenviskosität bei Kälte eines Suppengemisches unter Verwendung von natürlichem Kartoffelmehl in dem Suppengemisch 182, 167 beziehungsweise 291 mPa·s betragen.

10. Verfahren nach Anspruch 1, wobei in Schritt (vi) die Maximalviskosität, Pastenviskosität bei Wärme und Pastenviskosität bei Kälte eines Suppengemisches unter Verwendung von Mehl aus in einem Trockenschrank getrockneten Kartoffeln anstelle von Maismehl und Weizenmehl in dem Suppengemisch 133, 130 beziehungsweise 208 mPa·s betragen.

11. Verfahren nach Anspruch 1, wobei in Schritt (vi) das Suppengemisch in Beutel aus metallisiertem Polyester-/Polyethylenlaminat mit einer Dicke von 150 bis 250 Gauge verpackt wird, eine Haltbarkeit von bis zu 8 Monaten bei 65 % relativer Luftfeuchtigkeit bei Raumtemperatur aufweist.

12. Verfahren nach Anspruch 1, wobei in Schritt (vii) das Suppengemisch, wenn es in kaltem Wasser rekonstituiert (Suppengemisch : Wasser: 1:10-12), gerührt und zum Kochen gebracht wird, eine ausgezeichnete Farbe, einen ausgezeichneten Geschmack, ein ausgezeichnetes Aroma und eine ausgezeichnete Konsistenz und Gesamtqualität aufweist.

13. Verfahren nach Anspruch 1, wobei das Instantsuppengemisch rieselfähig ist, mit einem Feuchtigkeitsgehalt im Bereich von 3 bis 5 %, einem kritischen Feuchtigkeitsgehalt im Bereich von 9 bis 13 %, Fett im Bereich von 8 bis 9,5 %, freien Fettsäuren in mg/g von etwa 3,36, einem Peroxidwert/g von Null, Hunter-Farbwerten als L, a, b, von L: 73,0, a: -4,137, b: 16,13, und die Gesamtkeimzahl etwa 18750/g beträgt und Hefe und Schimmelpilze nicht vorliegen.

14. Instantsuppengemisch, welches durch das Verfahren nach Anspruch 1 erhältlich ist.

15. Instantsuppengemisch nach Anspruch 14, wobei die Suppe rieselfähig ist, mit einem Feuchtigkeitsgehalt im Bereich von 3 bis 5 %, einem kritischen Feuchtigkeitsgehalt im Bereich von 9 bis 13 %, Fett im Bereich von 8 bis 9,5 %, freien Fettsäuren in mg/g von etwa 3,36, einem Peroxidwert/g von Null, Hunter-Farbwerten als L, a, b, von L: 73,0, a: -4,137, b: 16,13, und die Gesamtkeimzahl etwa 18750/g beträgt und Hefe und Schimmelpilze nicht vorliegen.

## Revendications

1. Procédé permettant de préparer un mélange pour soupe instantanée à partir d'aneth des Indes (*Anethum Sowa*)*,* ledit procédé comprenant les étapes consistant à :
i) couper les feuilles lavées d'aneth des Indes en des filaments ayant une longueur de 4 à 5 cm ;
ii) tremper les filaments de l'étape (i) dans une solution contenant 0,5 à 1,0 % de bicarbonate de sodium pendant une période allant de 20 à 40 minutes ;
iii) sécher les filaments trempés de l'étape (ii) en utilisant de l'air chaud à une température allant de 40° à 50° C ;
iv) réduire en poudre les filaments séchés de l'étape (iii) et les faire passer à travers un tamis avec une taille de pore d'environ 400 à 600 µm.
v) réduire en poudre les cubes de pommes de terre séchés au tambour, séchés en chambre et séchés au soleil, et les filaments d'oignons séchés et les faire passer à travers un tamis avec une taille de pore d'environ 500 µm.
vi) mélanger de la poudre de lait écrémé : de la farine de maïs : de la farine de pomme de terre : de la farine de froment : de la maltodextrine : des graisses : de la poudre d'aneth : du sel : du sucre : de l'oignon : du poivre, selon un rapport dans la plage de 10-20 : 12-15 : 10-12 : 10-14 : 10 :14 : 3-8 : 3-6 : 3-5 : 3-7 : 2-4 :1-2,5 (poids/poids) respectivement afin d'obtenir une soupe, et
vii) obtenir le mélange pour soupe instantanée en faisant sécher le mélange pour soupe de l'étape vi) jusqu'à ce que le contenu en humidité dudit mélange soit de l'ordre de 3 à 5 %.

2. Procédé selon la revendication 1, dans lequel à l'étape (ii) le rapport des filaments et de la solution est de 1 : 2.

3. Procédé selon la revendication 1, dans lequel à l'étape (v), les pommes de terre et les oignons sont séchés en utilisant des techniques de séchage sélectionnées parmi un groupe constitué du séchage au tambour, du séchage en chambre et du séchage au soleil.

4. Procédé selon la revendication 3, dans lequel le séchage au tambour des pommes de terre est effectué en suivant les étapes consistant à :
(i) découper les pommes de terre en cubes ;
(ii) faire cuire les pommes de terre de l'étape (a) à une température de 70° à 75° C dans un autoclave pendant environ 15 à 20 minutes suivi d'un refroidissement à une température de 12° à 17° C pendant environ 15 à 20 minutes ;
(iii) faire cuire les pommes de terre refroidies à l'étape (ii) à une température dans la plage allant de 75° à 85° C pendant environ 15 à 20 minutes ;
(iv) écraser les pommes de terre cuites de l'étape (iii) afin d'obtenir un mélange ;
(v) ajouter du pyrosulfite de potassium dans la plage allant de 1 500 à 2 500 mg/kg, un concentré de protéines de sérum dans la plage allant de 0,02 % à 0,09 % et du glutamate de sodium dans la plage allant de 0,05 à 0,01 % à la purée de pommes de terre, et
(vi) faire sécher la purée de pommes de terre de l'étape (v), la réduire en poudre et la faire passer à travers un tamis avec une taille de pore dans la plage allant de 400 à 600 µm afin d'obtenir la farine de pommes de terre.

5. Procédé selon la revendication 4, dans lequel le séchage en chambre des pommes de terre est effectué en suivant les étapes consistant à :
(i) découper les pommes de terre en cubes ;
(ii) mettre les pommes de terre de l'étape (i) dans un autoclave pendant environ 3 à 8 minutes pour inactiver l'enzyme, suivi d'un refroidissement de celui-ci ;
(iii) ajouter du pyrosulfite de potassium aux pommes de terre de l'étape (ii) dans la plage de 1 500 à 2 500 mg/kg pendant une période allant de 10 à 30 minutes ;
(iv) faire sécher les pommes de terre de l'étape (iii) à une température dans la plage allant de 60° à 70° C pendant environ 6 à 8 heures, et
(v) réduire les pommes de terre séchées de l'étape (iv) en poudre et les faire passer ensuite à travers un tamis avec une taille de pore dans la plage de 400 à 600 µm afin d'obtenir la farine de pommes de terre.

6. Procédé selon la revendication 4, dans lequel le séchage et moulage de l'oignon sont réalisés en suivant les étapes consistant à :
(i) découper en tranches les oignons épluchés ;
(ii) faire sécher les oignons découpés en tranche de l'étape (i) à l'air chaud à une température dans la plage allant de 55 à 65° C afin d'obtenir les filaments d'oignons séchés, et
(iii) moudre les filaments d'oignons séchés de l'étape (ii) et les faire passer à travers un tamis avec une taille de pore dans la plage allant de 400 à 600 µm afin d'obtenir la poudre d'oignons.

7. Procédé selon la revendication 1, dans lequel dans l'étape (vi), la viscosité de crête, la viscosité de pâte chaude et la viscosité de pâte froide du mélange pour soupe en utilisant la farine de pommes de terre obtenue par un séchage au tambour sont de 127, 107 et 186 mPa.s, respectivement.

8. Procédé selon la revendication 1, dans lequel dans l'étape (vi), la viscosité de crête, la viscosité de pâte chaude et la viscosité de pâte froide du mélange pour soupe en utilisant la farine de pommes de terre obtenue par un séchage en chambre dans le mélange pour soupe sont de 145, 126 et 288 mPa·s, respectivement.

9. Procédé selon la revendication 1, dans lequel dans l'étape (vi), la viscosité de crête, la viscosité de pâte chaude et la viscosité de pâte froide du mélange pour soupe en utilisant la farine de pommes de terre obtenue de manière naturelle dans le mélange pour soupe sont de 182, 167 et 291 mPa·s, respectivement.

10. Procédé selon la revendication 1, dans lequel dans l'étape (vi), la viscosité de crête, la viscosité de pâte chaude et la viscosité de pâte froide du mélange pour soupe en utilisant de la farine de pommes de terre obtenue par un séchage en chambre à la place de la farine de maïs et de la farine de blé dans le mélange pour soupe sont de 133, 130 et 208 mPa.s, respectivement.

11. Procédé selon la revendication 1 dans lequel dans l'étape (vi), le mélange pour soupe est emballé dans des poches stratifiées de polyester/polyéthylène métallisées ayant une épaisseur de 150 à 250 gauge, une durée de conservation de 8 mois à une température de chambre avec 65 % d'humidité relative.

12. Procédé selon la revendication 1, dans lequel dans l'étape (vii), le mélange pour soupe, quand il est reconstitué dans de l'eau froide (mélange pour soupe instantanée : eau : 10-12), remué et amené en ébullition, présente d'excellente couleur, saveur, odeur et consistance et surtout une qualité supérieure.

13. Procédé selon la revendication 1, dans lequel le mélange pour soupe instantanée s'écoule librement avec un contenu en humidité dans la plage de 3 à 5 %, un contenu en humidité critique dans la plage allant de 9 à 13 %, des graisses dans la plage allant de 8 à 9,5 %, des acides sans graisses d'environ 3,36 mg/g, une valeur/g de peroxyde : zéro, des valeurs de couleurs telles que L, a, b, L : 73,0, a : -4,137, b : 16,13 et le plat complet est d'environ 18 750/g sans levure ni moisissures.

14. Mélange pour soupe instantanée pouvant être obtenu selon le procédé de la revendication 1.

15. Mélange pour soupe instantanée selon la revendication 14, dans lequel la soupe s'écoule librement avec un contenu en humidité dans la plage de 3 à 5 %, un contenu en humidité critique dans la plage allant de 9 à 13 %, des graisses dans la plage allant de 8 à 9,5 %, des acides sans graisses d'environ 3,36 mg/g, une valeur/g de peroxyde : zéro, des valeurs de couleurs telles que L, a, b, L : 73,0, a : -4,137, b : 16,13 et le plat complet est d'environ 18 750/g sans levure ni moisissures.
